# EUROPEAN PATENT SPECIFICATION

(11) **EP 3 679 639 B1**
(45) Date of publication and mention of the grant of the patent: **01.11.2023**
(21) Application number: 18853480.4
(22) Date of filing: 06.09.2018
(51) Int. Cl.: H01F 38/14, H01F 27/255, H01F 27/36, H01F 27/28, H01F 27/40, B60L 53/12, H02J 7/00, H02J 50/70, H02J 50/12, H02J 50/00

(54) **WIRELESS POWER TRANSFER PAD WITH FERRITE CHIMNEY**
DRAHTLOSES LEISTUNGSÜBERTRAGUNGSPAD MIT FERRITSCHORNSTEIN
TAPIS DE TRANSFERT D'ÉNERGIE SANS FIL À CHEMINÉE EN FERRITE

(30) Priority: 06.09.2017 US 201762554950 P; 06.09.2017 US 201762554960 P
(43) Date of publication of application: 15.07.2020
(73) Proprietor: Wireless Advanced Vehicle Electrification, Inc., Salt Lake City, Utah 84104 (US)
(72) Inventor: LETHELLIER, Patrice, Herriman, Utah 84096 (US)
(74) Representative: Thorniley, Peter
(86) International application number: PCT/US2018/049783
(87) International publication number: WO 2019/051109

(56) References cited:
- EP-A1- 2 824 793
- EP-A1- 2 928 039
- WO-A1-2012/039245
- WO-A1-2019/022438
- US-A1- 2008 129 246
- US-A1- 2010 181 842
- US-A1- 2010 181 842
- US-A1- 2010 253 153
- US-A1- 2011 127 845
- US-A1- 2013 181 668
- US-A1- 2013 181 668
- US-A1- 2015 091 519
- US-A1- 2015 145 340
- US-A1- 2017 040 845
- US-A1- 2017 092 409

## Description

### FIELD OF THE INVENTION

This invention relates to wireless power transfer and more particularly relates to wireless power transfer pads.

### BACKGROUND

Wireless power transfer is becoming increasingly popular. Wireless power transfer involves transmitting power from a primary pad located on a stationary wireless power transfer device, such as a charging station, to a secondary pad on a mobile device, such as an electric vehicle, over a significant gap. The gap typically includes an air gap and can be significant. For example, the air gap may be from ground level to a secondary pad located under a vehicle. An air gap in the range of six inches to 10 inches (1 inch = 25.4 mm) is not uncommon. As the amount of power transferred over an air gap increases, voltages for transmission and reception systems has increased. One method of wireless power transfer includes using a resonant tank, which often boosts voltages of a wireless power transfer pad, which increases voltage ratings of components used for the equipment. As voltages increase, electromagnetic field strengths increase, which may pose a danger to people exposed to the electromagnetic radiation. Various methods are used in wireless power transfer to direct electromagnetic fields in a particular direction and to increase efficiency of the wireless power transfer.

International patent application WO 2012/039245 discloses a coil module for contactless electric power transfer, the coil module is provided with a first coil which is wound in a plane and a magnetic sheet on which the first coil is disposed. The coil module transfers, by means of electromagnetic induction, electric power between the first coil and a second coil which is disposed so as to face the first coil. The magnetic sheet includes protrusions protruding toward the second coil and located either at the center of the first coil and/or outside the first coil.

United States patent application US 2008/129246 discloses noncontact type power feeder system for feeding a power to a mobile object, in which a power feeding portion and a power receiving portion can be easily manufactured at low costs and which can transmit a high power. The noncontact type power feeder system for a mobile object, comprises a power feeding portion provided in a surface on which the mobile object runs, and a power receiving portion provided in the lower part of the mobile object at a position facing to the power supply portion, the each of the power feeding portion and the power receiving portion is composed of windings formed in an oval shape, and a magnetic planar core formed therein with a recess in which the windings are accommodated so that the longitudinal direction of the oval shape of the windings is extended along the travel direction of the mobile object, the planer core is composed of several planar blocks each having a rectangular surface, several blocks being laid so that long sides of the rectangular surfaces are extended in the travel direction of the mobile object, in which several blocks are also laid in the direction orthogonal to the travel direction, and several blocks being superposed one upon another, the recess of the planar core is defined by thick wall parts in which the planar cores are superposed on the surface of the planar core, outside and inside of the oval shape part of the windings.

European patent application EP 2824793 discloses a wireless charging system that includes a first winding portion, a second winding portion which is disposed with an interval between the first winding portion and the second winding portion in an axis direction of the first winding portion, and a pair of magnetic members which are disposed so as to sandwich the first winding portion and the second winding portion in the axis direction. In this case, protrusion portions which protrude toward the other magnetic member are provided in one magnetic member. Also, the magnetic member is held so as to be able to move forward and backward toward the other magnetic member. As a result, since the coefficient of magnetic coupling between a transmitting unit and a receiving unit during charging is enhanced, a charging efficiency can be enhanced.

US 2017/092409 A1 discloses a wireless power transfer pad according to the preamble of present claim 1.

US 2017/040845 A1 discloses a wireless power transfer pad with a capacitor disposed in the center section of the winding.

### SUMMARY

According to the present invention a wireless power transfer, WPT, pad as defined in present claim 1 is provided.

Preferred embodiments are specified in the dependent claims.

### BRIEF DESCRIPTION OF THE DRAWINGS

In order that the advantages of the invention will be readily understood, a more particular description of the invention briefly described above will be rendered by reference to specific embodiments that are illustrated in the appended drawings. Understanding that these drawings depict only typical embodiments of the invention and are not therefore to be considered to be limiting of its scope, the invention will be described and explained with additional specificity and detail through the use of the accompanying drawings, in which:
Figure 1 is a schematic block diagram illustrating one embodiment of a system with a wireless power transfer ("WPT") pad with a ferrite chimney;
Figure 2 is a schematic block diagram illustrating one embodiment of a power converter apparatus;
Figure 3A is a schematic block diagram plan view of one embodiment of a WPT pad, not showing all features of the present invention, with a ferrite chimney in a center of the WPT pad;
Figure 3B is a schematic block diagram section view of WPT pads represented in Figure 3A;
Figure 4A is a schematic block diagram plan view of one embodiment of a WPT pad, not showing all features of the present invention, with a ferrite chimney in a center and exterior edge of the WPT pad;
Figure 4B is a schematic block diagram section view of WPT pads represented in Figure 4A;
Figure 5A is a schematic block diagram plan view of one embodiment of a two winding WPT pad, not forming part of the present invention,
with a ferrite chimney in a center and exterior edge of the WPT pad;
Figure 5B is a schematic block diagram section view of WPT pads represented in Figure 5A;
Figure 6 is a schematic block diagram illustrating one embodiment of a low voltage WPT pad;
Figure 7 is a schematic block diagram illustrating a plan view of the embodiment of a low voltage WPT pad of Figure 6, illustrating an embodiment of the present invention;
Figure 8A is a schematic block diagram plan view of one embodiment of a WPT pad, not forming part of the present invention, with a pyramid-shaped ferrite chimney in a center of the WPT pad;
Figure 8B is a schematic block diagram section view of a WPT pad represented in Figure 8A along with an opposing WPT pad with a chimney section;
Figure 9A is a schematic block diagram plan view of one embodiment of a WPT pad, not forming part of the present invention, with a pyramid-shaped ferrite chimney in a center and a ferrite chimney exterior edge of the WPT pad;
Figure 9B is a schematic block diagram section view of WPT pads represented in Figure 9A along with an opposing WPT pad with a chimney section and an exterior section;
Figure 10A is a schematic block diagram plan view of one embodiment of a two winding WPT pad, not forming part of the present invention,
with a pyramid-shaped ferrite chimney in a center and a ferrite chimney exterior edge of the WPT pad;
Figure 10B is a schematic block diagram section view of a WPT pad represented in Figure 10A along with an opposing WPT pad with a chimney section; and
Figure 11 is a representative graph of coupling coefficient vs alignment for a typical WPT pad and for a WPT pad with a pyramid-shaped ferrite chimney.

### DETAILED DESCRIPTION OF THE INVENTION

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise.

Furthermore, the described features, structures, or characteristics of the invention may be combined in any suitable manner in one or more embodiments, within the scope of the present invention.

One skilled in the relevant art will recognize, however, that the invention may be practiced without one or more of the specific details, or with other methods, components, materials, and so forth. In other instances, well-known structures, materials, or operations are not shown or described in detail to avoid obscuring aspects of the invention.

A wireless power transfer ("WPT") pad, according to present claim 1, with a ferrite chimney is disclosed. The WPT pad includes a winding with a conductor where the conductor is wound in a planar configuration. The winding includes a center section about which the winding is wound. The WPT pad includes a ferrite structure with a parallel section located on a side of the winding with at least a portion in parallel with the winding, and a chimney section in magnetic contact with the parallel section and located in the center section of the winding, the chimney section extending perpendicular to the parallel section.

In some embodiments, the chimney section extends in a direction from the parallel section toward the winding and extends a distance of at least a thickness of the winding, where the thickness is measured in a direction perpendicular to the parallel section of the ferrite structure. In other embodiments, the chimney section extends a distance beyond the thickness of the winding. In other embodiments, the chimney section is positioned adjacent to the winding in the center section of the winding. In other embodiments, the ferrite structure includes an exterior section located exterior to an outside edge of the winding. The outside edge is distal to an inside edge adjacent to the center section of the winding, where the exterior section is in magnetic contact with the parallel section and extends perpendicular to the parallel section. In a further embodiment, the exterior section extends in a direction from the parallel section toward the winding and extends a distance of at least a thickness of the winding. The thickness is measured in a direction perpendicular to the ferrite structure.

The chimney section includes a gap where one or more capacitors of the WPT pad are located in the center section of the winding and one or more conductors from the winding to the one or more components extend through the gap. In some embodiments, an end of the winding is located at an exterior edge of the center section and is wound in a circular pattern that expands from a center point within the center section where each succeeding lap of the winding is external to a previous lap of the winding. In further embodiments, each lap of the winding is within a same plane and the plane is parallel to the parallel section of the ferrite structure.

In some embodiments, not forming part of the present invention, the WPT pad includes two or more windings where each winding includes a parallel section of a ferrite structure associated with the winding and a center section. Each center section includes a chimney section of the ferrite structure associated with the winding. In further embodiments, the ferrite structures of each of the two or more windings are adjacent to each other and are magnetically coupled. In other embodiments, the WPT pad is a transmitter pad that transmits power wirelessly to a secondary pad or secondary pad that receives power wirelessly from a transmitter pad. In other embodiments, the WPT pad is part of a wireless power transfer system that transfers power wirelessly to a vehicle.

A WPT system includes a resonant converter that is adapted to receive power from a power source and the WPT pad being connected to the resonant converter, where the WPT pad receives power from the resonant converter.

A wireless power transfer ("WPT") pad, not forming part of the present invention, with a pyramid-shaped ferrite chimney is disclosed. The WPT pad includes a winding comprising a conductor where the conductor is wound in a planar configuration. The winding includes a center point about which the winding is wound. The WPT pad includes a ferrite structure that includes a parallel section located on a side of the winding with at least a portion in parallel with the winding and a chimney section in magnetic contact with the parallel section and located at the center point of the winding. The chimney section extends perpendicular to the parallel section.

In some embodiments, the chimney section extends in a direction from the parallel section toward the winding. The chimney section includes a top distal to the parallel section and sides between the top and the parallel section. In other embodiments, the sides of the chimney section include a slope wherein each side is wider at the parallel section than at the top of the chimney section. In further embodiments, the slope of the sides is chosen to accommodate an expected amount of magnetic flux from the parallel section through the chimney section and through the top where the slope accommodates the expected amount of magnetic flux without saturation of the chimney section.

In other embodiments, the top has a width sized to accommodate an expected magnetic flux through the top without saturation of the chimney section. In other embodiments, the chimney section extends away from the parallel section a distance at least a thickness of the winding, where the thickness is measured in a direction perpendicular to the parallel section of the ferrite structure. In further embodiments, the chimney section extends a distance beyond the thickness of the winding.

In some embodiments, the chimney section is positioned within a center section of the winding. In other embodiments, the ferrite structure includes an exterior section located exterior to an outside edge of the winding, where the outside edge is distal to the chimney section. The exterior section is in magnetic contact with the parallel section and extends perpendicular to the parallel section. In further embodiments, the exterior section extends in a direction from the parallel section toward the winding and a distance at least a thickness of the winding, the thickness measured in a direction perpendicular to the ferrite structure.

In some embodiments, an end of the winding is located at an exterior edge of a center section about the center point and is wound in a circular pattern that expands from the center point within the center section, where each succeeding lap of the winding is external to a previous lap of the winding. In further embodiments, each lap of the winding is within a same plane, the plane parallel to the parallel section of the ferrite structure. In other embodiments, the WPT pad includes two or more windings where each winding includes a parallel section of a ferrite structure associated with the winding and a center section. Each center section includes a chimney section of the ferrite structure associated with the winding. In further embodiments, the ferrite structures of each of the two or more windings are adjacent to each other and are magnetically coupled.

In some embodiments, the WPT pad is configured to couple with an opposing WPT pad where the WPT pad is a transmitter pad that transmits power wirelessly to an opposing WPT pad that is a secondary pad or secondary pad that receives power wirelessly from an opposing WPT pad that is a transmitter pad. In further embodiments, the opposing WPT pad has a center section and a chimney section on each side of the center section adjacent to a winding of the opposing WPT pad. In other embodiments, the WPT pad is part of a wireless power transfer system that transfers power wirelessly to a vehicle.

Another WPT pad, not forming part of the present invention, with a pyramid-shaped ferrite chimney is disclosed. The WPT pad includes a winding comprising a conductor where the conductor is wound in a planar configuration. The winding includes a center point about which the winding is wound. The WPT pad includes a ferrite structure that includes a parallel section located on a side of the winding with at least a portion in parallel with the winding and a chimney section in magnetic contact with the parallel section and located at the center point of the winding. The chimney section extends perpendicular to the parallel section where the chimney section extends in a direction from the parallel section toward the winding. The chimney section includes a top distal to the parallel section and sides between the top and the parallel section, where the sides of the chimney section include a slope where each side is wider at the parallel section than at the top of the chimney section.

In some embodiments, the chimney section and the exterior section each extend away from the parallel section a distance at least a thickness of the winding, where the thickness is measured in a direction perpendicular to the parallel section of the ferrite structure.

A WPT system, not forming part of the present invention, with a pyramid-shaped ferrite chimney is disclosed. The WPT system includes a resonant converter that receives power from a power source and a WPT pad connected to the resonant converter, where the WPT pad receives power from the resonant converter. The WPT pad includes a ferrite structure that includes a parallel section located on a side of the winding with at least a portion in parallel with the winding and a chimney section in magnetic contact with the parallel section and located at the center point of the winding. The chimney section extends perpendicular to the parallel section.

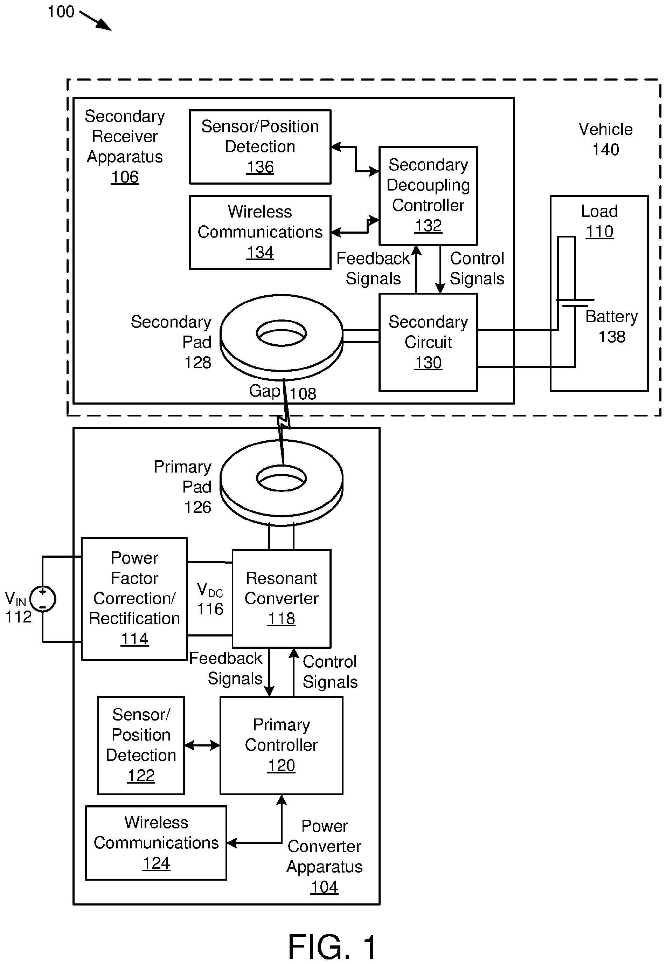

Figure 1 is a schematic block diagram illustrating one embodiment of a wireless power transfer ("WPT") system 100 with a WPT pad with a ferrite chimney. The WPT system 100 includes a power converter apparatus 104 and a secondary receiver apparatus 106 separated by a gap 108, and a load 110, which are described below.

The WPT system 100 includes a power converter apparatus 104 that receives power from a power source 112 and transmits power over a gap 108 to a secondary receiver apparatus 106, which transfers power to a load 110. The power converter apparatus 104, in one embodiment, includes a resonant converter 118 that receives a direct current ("DC") voltage from a DC bus 116. In one embodiment, the power source 112 provides DC power to the DC bus 116. In another embodiment, the power source 112 is an alternating current ("AC") power source, for example from a building power system, from a utility, from a generator, etc. and the power converter apparatus 104 includes a form of rectification to provide DC power to the DC bus 116. For example, the rectification may be in the form of a power factor correction and rectification circuit 114. In the embodiment, the power factor correction and rectification circuit 114 may include an active power factor correction circuit, such as a switching power converter. The power factor correction and rectification circuit 114 may also include a full-bridge, a half-bridge rectifier, or other rectification circuit that may include diodes, capacitors, surge suppression, etc.

The resonant converter 118 may be controlled by a primary controller 120, which may vary parameters within the resonant converter 118, such as conduction time, conduction angle, duty cycle, switching, etc. The primary controller 120 may receive information from sensors and position detection 122 within or associated with the power converter apparatus 104. The primary controller 120 may also receive information wirelessly from the secondary receiver apparatus 106.

The power converter apparatus 104 includes a primary pad 126 that receives power from the resonant converter 118. In one embodiment, portions of the resonant converter 118 and primary pad 126 form a resonant circuit that enables efficient wireless power transfer across the gap 108. The gap 108, in some embodiments includes an air gap, but may also may partially or totally include other substances. For example, where the primary pad 126 is in a roadway, the gap 108 may include a resin, asphalt, concrete, plastic or other material just over the windings of the primary pad 126 in addition to air, snow, water, etc. between the primary pad 126 and a secondary pad 128 located in the secondary receiver apparatus 106.

The secondary receiver apparatus 106 includes a secondary pad 128 connected to a secondary circuit 130 that delivers power to the load 110. The secondary receiver apparatus 106 may also include a secondary decoupling controller 132 that controls the secondary circuit 130 and may also be in communication with sensors and/or position detection 136 and wireless communications 134 coupled to the power converter apparatus 104.

In one embodiment, the secondary receiver apparatus 106 and load 110 are part of a vehicle 140 that receives power from the power converter apparatus 104. The load 110 may include a battery 138, a motor, a resistive load, a circuit or other electrical load. For example, the WPT system 100 may transfer power to a portable computer, a consumer electronic device, to an industrial load, or other load that would benefit from receiving power wirelessly.

In one embodiment, the secondary circuit 130 includes a portion of resonant circuit that interacts with the secondary pad 128 and that is designed to receive power at a resonant frequency. The secondary circuit 130 may also include a rectification circuit, such as a full-bridge rectifier, a half-bridge rectifier, and the like. In another embodiment, the secondary circuit 130 includes a power converter of some type that receives power from the resonant circuit/rectifier and actively controls power to the load 110. For example, the secondary circuit 130 may include a switching power converter. In another embodiment, the secondary circuit 130 includes passive components and power to the load 110 is controlled by adjusting power in the power converter apparatus 104. In another embodiment, the secondary circuit 130 includes an active rectifier circuit that may receive and transmit power. One of skill in the art will recognize other forms of a secondary circuit 130 appropriate for receiving power from the secondary pad 128 and delivering power to the load 110.

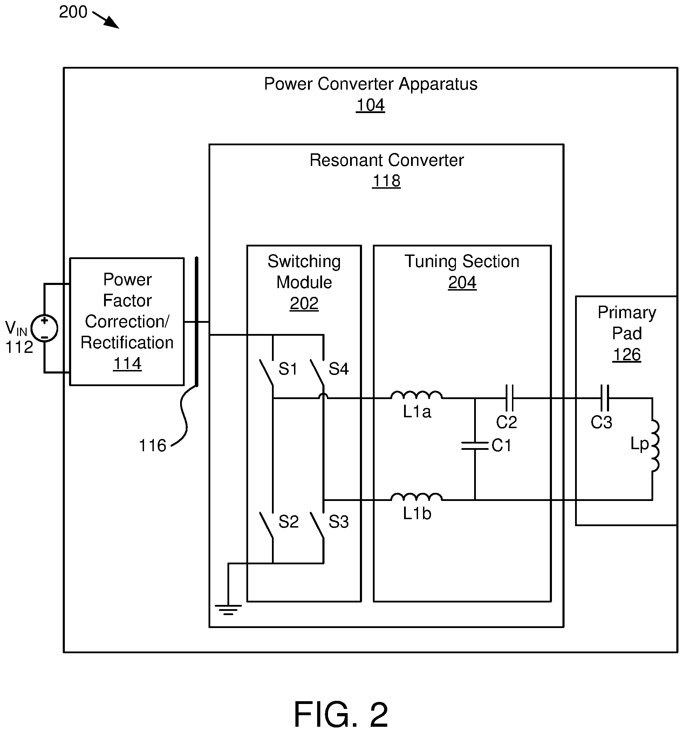

The resonant converter 118, in one embodiment, includes an active switching section coupled to a resonant circuit formed with components of the resonant converter 118 and the primary pad 126. The resonant converter 118 is described in more detail with regard to Figure 2.

Figure 2 is a schematic block diagram illustrating one embodiment of a power converter apparatus 104. The power converter apparatus 104 is connected to a power source 112 and includes a power factor correction and rectification circuit 114 connected to a DC bus 116 feeding a resonant converter 118 connected to a primary pad 126 as described with regard to the WPT system 100 of Figure 1.

The resonant converter 118 includes a switching module 202 and a tuning section 204. The switching module 202, includes four switches configured to connect the DC bus 116 and to ground. Typically, switches S1 and S3 close while switches S2 and S4 are open and vice-versa. When switches S1 and S3 are closed, the DC bus 116 is connected to a positive connection of the tuning section 204 through inductor L1a and the ground is connected to the negative connection of the tuning section 204 through inductor L1b while switches S2 and S4 are open. When switches S2 and S4 are closed, the ground is connected to the positive terminal of the tuning section 204 and the DC bus 116 is connected to the positive connection of the tuning section 204. Thus, the switching module alternates connection of the DC bus 116 and ground to the tuning section simulating an AC waveform. The AC waveform typically imperfect due to harmonics.

Typically switches S1-S4 are semiconductor switches, such as a metal-oxide-semiconductor field-effect transistor ("MOSFET"), a junction gate field-effect transistor ("JFET"), a bipolar junction transistor ("BJT"), an insulated-gate bipolar transistor ("IGBT") or the like. Often the switches S1-S4 include a body diode that conducts when a negative voltage is applied. In some embodiments, the timing of opening and closing switches S1-S4 are varied to achieve various modes of operations, such as zero-voltage switching.

The tuning section 204 of the resonant converter 118 and the primary pad 126 are designed based on a chosen topology. For example, the resonant converter 118 and primary pad 126 may form an inductor-capacitor-inductor ("LCL") load resonant converter, a series resonant converter, a parallel resonant converter, and the like. The embodiment depicted in Figure 2 includes an LCL load resonant converter.

Resonant converters include an inductance and capacitance that form a resonant frequency. When a switching frequency of the tuning section 204 is at or close to the resonant frequency, voltage with the tuning section 204 and primary pad 126 often increases to voltages levels higher than the voltage of the DC bus 116. For example, if the voltage of the DC bus 116 is 1 kilovolt ("kV"), voltage in the tuning section 204 and resonant converter 118 may be 3 kV or higher. The high voltages require component ratings, insulation ratings, etc. to be high enough for expected voltages.

The primary pad 126 includes capacitor C3 and inductor Lp while the tuning section 204 includes series capacitor C2. Capacitors C2 and C3 add to provide a particular capacitance that forms a resonant frequency with inductor Lp. While the apparatus 200 of Figure 2 is focused on the resonant converter 118 and primary pad 126, the secondary receiver apparatus 106 includes a secondary pad 128 and a secondary circuit 130 that typically includes a tuning section where the inductance of the secondary pad 128 and capacitance of the tuning section of the secondary circuit 130 form a resonant frequency and the secondary pad 128 and secondary circuit 130 have voltage issues similar to the primary pad 126 and resonant converter 118.

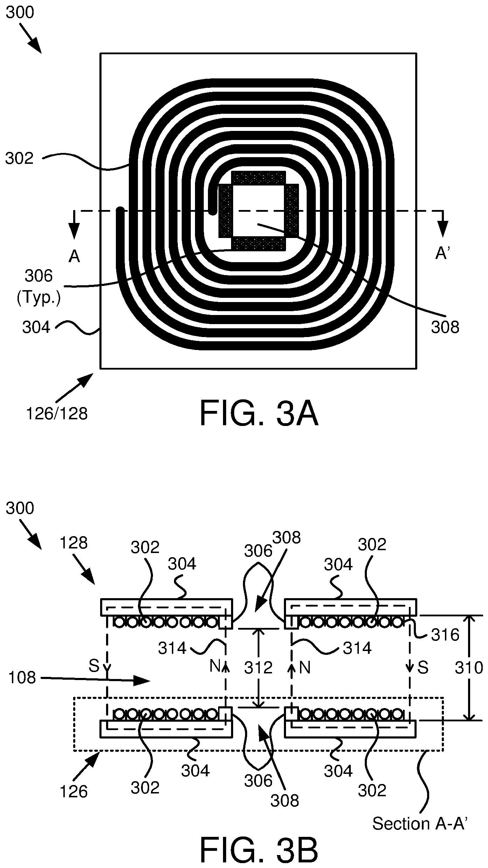

Figure 3A is a schematic block diagram plan view of one embodiment 300 of a WPT pad 126, 128, not showing all features of the present invention, with a ferrite chimney in a center of the WPT pad 126, 128. The WPT pad 126, 128 can be a primary pad 126 or a secondary pad 128. Figure 3B is a schematic block diagram section view of WPT pads 126, 128 represented in Figure 3A, which are the same embodiment 300.

The WPT pads 126, 128 each include a winding 302 parallel to a parallel section 304 of a ferrite structure. The ferrite structure also includes a center chimney section 306 located in a center section 308 of the winding 302. The winding 302 includes a conductor wound in a planar configuration about the center section 308 about which the winding 302 is wound. Typically, the winding 302 is not wound with an empty space in the center for a variety of reasons. For example, bending radius of the conductor may prevent a tight winding 302 without an open center section. In another example, including the conductor in the center section 308 may be less efficient than leaving an open center section because conductor in the center section 308 may not contribute significantly to the magnetic field directed toward an opposing pad. One of skill in the art will recognize other reasons for an open center section 308.

Figure 3B is a cross section of both a primary pad 126 and a secondary pad 128. (See Section A-A', which is representative of both WPT pads 126, 128, although in Figure 3B the section is depicted only on the primary pad 126 for clarity.) Both the primary pad 126 and the secondary pad 128 may have similar layout as depicted in Figure 3A. The WPT pads 126, 128 may include separators 316 or some other structure to keep the winding 302 in place. The conductors of the winding 302 are depicted in Figure 3B as round for convenience, but may be oblong, square, rectangular or another shape and may be litz wire or some other multi-strand conductor. Typically, the winding 302 of the primary pad 126 and the secondary pad 128 are facing each other, which helps to direct the magnetic field between the WPT pads 126, 128. A simplified magnetic pathway 314 is depicted where the center section forms a north pole and the exterior edges of the WPT pads 126, 128 form a south pole.

Note that the ferrite structure does not extend into the center section 308. Often, not much is gained from having ferrite in the center section. In other embodiments, the center section includes ferrite material. For example, some embodiments may have a specific structure in the center section 308, which may assist in misalignment.

While the winding 302 in Figure 3A is depicted as a single conductor, other configurations may include two or more conductors wound in parallel, which may reduce voltage requirements of the WPT pads 126, 128. In one embodiment, the winding 302 is wound in a single layer in a planar configuration starting at a center point and each wrap is laid external to a previous wrap. For example, the winding 302 may be in a Euclidean spiral or in a shape similar to a Euclidean spiral, such as depicted in Figure 3A where the spiral of the winding 302 is not circular but is more square or rectangular shaped. A winding 302 in this Euclidean spiral-like shape is beneficial for wireless power transfer in shaping an electromagnetic field from a primary pad 126 directed toward a secondary pad 128. In other embodiments, the winding 302 may include two or more layers of conductors.

The parallel section 304 is located on a side of the winding 302 with at least a portion in parallel with the winding 302. The depicted embodiment, as can be seen in Figure 3B, includes a parallel section 304 that is rectangular. Other shapes may be used where at least a portion in parallel with the winding 302. For example, the ferrite structure may have split shape as described in U.S. Patent Application No. 15/456,402 filed March 10, 2016 for Patrice Lethellier.

In some embodiments, the parallel section 304 of the ferrite structure includes ferrite bars in a radial pattern extending from the center section 308. In other embodiments, the parallel section 304 is made up of two or more ferrite elements that are in contact with each other or are close enough to form a magnetic pathway through the parallel section 304. One of skill in the art will recognize other designs of a parallel section 304 that include at least a portion in parallel with the winding 302.

The chimney section 306 is in in magnetic contact with the parallel section 304 and are located in the center section 308 of the winding 302. The chimney section 306 extends perpendicular to the parallel section 304. Typically, the primary pad 126 and the secondary pad are separated by a gap 108 where the parallel sections 304 are a distance 310 from each other. At the chimney section 306, the distance 312 is reduced within the gap 108. Typically, the electromagnetic field strength in the center section 308 is stronger than in other locations. The ferrite structure provides a magnetic pathway 314 that directs a majority of the electromagnetic field, although some flux lines exist outside the ferrite structure. At the gap 108, the magnetic pathway 314 jumps across the gap 108. The chimney section 306 provides a shortened distance 312 across the gap 108 where the electromagnetic field strength is typically strong, which may increase magnetic coupling and an associated coefficient of coupling between the WPT pads 126, 128.

Typically, the winding 302 is embedded in a material, such as a resin, a plastic, asphalt, etc., which may hold the winding 302 in place and the material typically has a thickness. The thickness of the chimney section 306, in one embodiment, is a distance at least a thickness of the winding 302, where the thickness is measured in a direction perpendicular to the parallel section 304 of the ferrite structure. Due to the thickness of the winding 302, having a chimney section 306 that is the thickness of the winding 302 or at least to a distance of the winding 302 beyond the parallel section 304 does not increase a total thickness of the WPT pads 126, 128. Where the chimney section 306 extends away from the parallel section 304 a distance of the thickness of the winding 302 and/or a distance of the winding 302 beyond the parallel section 304, a covering of the winding 302 may also extend across the chimney section 306 a same thickness as the covering over the winding 302.

In another embodiment, the chimney section 306 extends a distance beyond a thickness of the winding 302 and/or a distance of the winding 302 beyond the parallel section 304, which further reduces the distance 312 of the magnetic pathway 314 through the gap 108. However, in the embodiment the chimney section 306 may be exposed or may have a covering less thick than the covering over the winding 302.

The chimney section 306 may be designed based on a strength of the magnetic field at the location of the chimney section 306. For example, a width of the chimney section 306 may be sufficient to prevent saturation of the ferrite material used for the chimney section 306. In the embodiment depicted in Figure 3A, the chimney section 306 includes rectangular elements. The rectangular elements may be sized to accommodate the winding 302. Rectangular elements may be more readily available other shapes and may be used for convenience. In other embodiments, the rectangular elements may be sized to overlap to form a continuous chimney section 306. In other embodiments, the chimney section 306 includes a custom ferrite material shaped in a circle or other convenient shape. One of skill in the art will recognize other shapes of a chimney section 306.

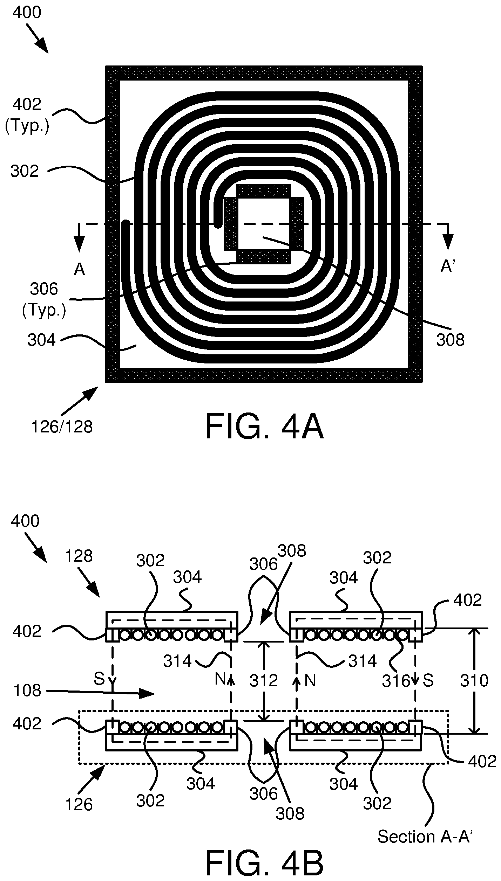

Figure 4A is a schematic block diagram plan view of one embodiment 400 of a WPT pad 126, 128, not showing all features of the present invention,

with a ferrite chimney in a center section 308 and along an exterior edge of the WPT pad 126, 128. Figure 4B is a schematic block diagram section view of WPT pads 126, 128 represented in Figure 4A, which are the same embodiment 400. In the embodiment 400, the WPT pads 126, 128 are the same as the embodiment 300 of Figures 3A and 3B but the ferrite structure includes an exterior section 402 around the perimeter of the parallel section 304. Discussion of the embodiment 300 of Figures 3A and 3B are substantially applicable to the embodiment 400 of Figures 4A and 4B.

The exterior section 402, in one embodiment, is located exterior to an outside edge of the winding 302, and the outside edge is distal to an inside edge adjacent to the center section 308 of the winding 302. The exterior section 402 is in magnetic contact with the parallel section 304 and extends perpendicular to the parallel section 304. By including an exterior section 402, the magnetic pathway 314 is further reduced and may further increase magnetic coupling and a coupling coefficient between the primary pad 126 and the secondary pad 128. In addition, the exterior section 402 may reduce stray electromagnetic radiation in a direction away from the WPT pads 126, 128, which may increase safety, may reduce a need for other shielding, may make passing of governmental emission standards easier, etc.

Note that the exterior section 402 of Figure 4A aligns with an exterior shape of the parallel section 304, which is square. In other embodiments, the parallel section 304 is shaped as a rectangle, a circle, an oval or other shape and the exterior section 402 may follow the exterior edge of the parallel section 304 or may be shaped differently.

As with the chimney section 306, the exterior section 402 may extend in a direction from the parallel section 304 toward the winding 302 and a distance at least a thickness of the winding 302 and/or a distance of the winding 302 beyond the parallel section 304, where the thickness is measured in a direction perpendicular to the ferrite structure. In another embodiment, the exterior section 402 extends a distance beyond a thickness of the winding 302 and/or a distance of the winding 302 beyond the parallel section 304.

In accordance with the present invention the chimney section 306 includes a gap and one or more capacitors of the WPT pads 126, 128 are located in the center section 308 of the winding 302 and one or more conductors from the windings 302 to the one or more components extend through the gap. For example, all or a portion of a ferrite bar of the chimney sections 306 in the embodiments 300, 400 of Figures 3A and 4A may be removed to allow for wiring.

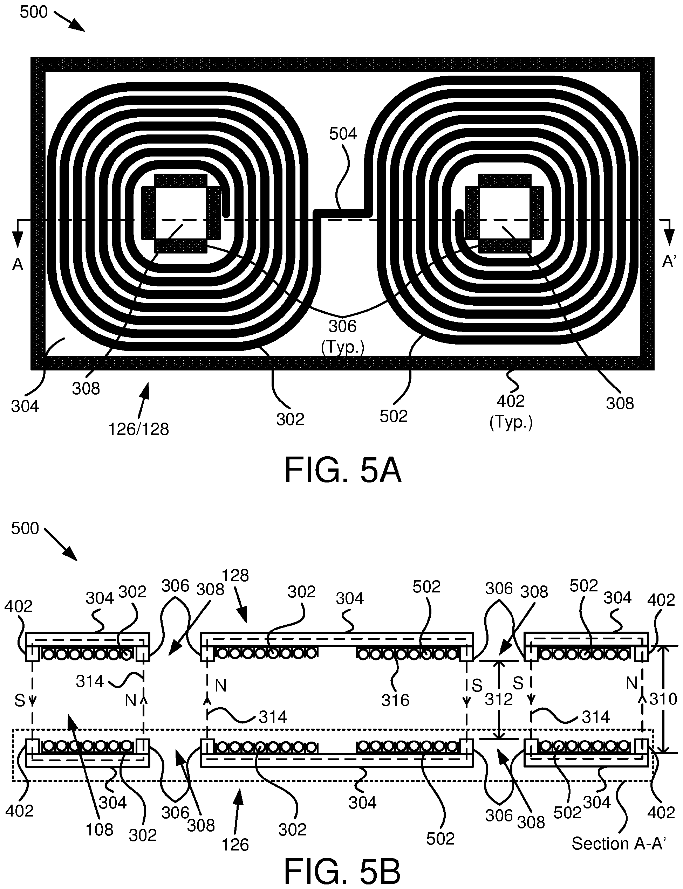

Figure 5A is a schematic block diagram plan view of one embodiment 500 of a two winding WPT pad 126, 128, not forming part of the present invention, with a ferrite chimney in a center section 308 and along an exterior edge of the WPT pad (e.g. 126 or 128). Figure 5B is a schematic block diagram section view of WPT pads 126, 128 represented in Figure 5A, which are the same embodiment 500. In the embodiment, the ferrite structure is adjacent to a first winding 302 and a second winding 502. The windings 302, 502 are connected and are wound to produce a north pole at a center section 308 of a first winding 302 and a south pole at the center section 308 of the second winding 502, or vice versa. The windings 302, 502 are adjacent to a parallel section 304 of the ferrite structure and include a chimney section 306 for each winding 302, 502. As described for the embodiments 300, 400 of Figures 3A, 3B, 4A and 4B, the distance 312 between chimney sections 306 is less than the distance 310 between the parallel sections 304. The magnetic pathways 314 are different than the embodiments 300, 400 of Figures 3A, 3B, 4A and 4B.

Figure 5B again depicts section views of a primary pad 126 and a secondary pad 128. The windings 302, 502 may include separators 316. The magnetic pathways 314 include a north pole at the chimney section 306 of the first winding 302 and a south pole at the chimney section 306 of the second winding 502 with opposing poles at the edges of the WPT pads 126, 128. Dual windings 302, 502 provide advantages in some instances, such as a stronger electromagnetic field between the windings 302, 502.

One embodiment of WPT pads 126, 128 with two windings 302, 502 (not shown) includes chimney sections 306 for both windings 302, 502 without exterior sections 402. In the embodiment 500 depicted in Figures 5A and 5B, the WPT pads 126, 128 include exterior sections 402 on the exterior edges of the parallel section 304 of the ferrite structure. Note that one WPT pad (e.g. primary pad 126) may include an exterior section 402 while the opposite WPT pad (e.g. secondary pad 128) may exclude exterior sections 402, or vice versa. As with the other described embodiments 300, 400, the center sections 308 may be void of ferrite material in some embodiments, or may include ferrite material in the center sections 308. In addition, the parallel section 304 and/or exterior section 402 may be shaped differently than shown, as described with regard to the embodiments 300, 400 of Figures 3A, 3B, 4A and 4B.

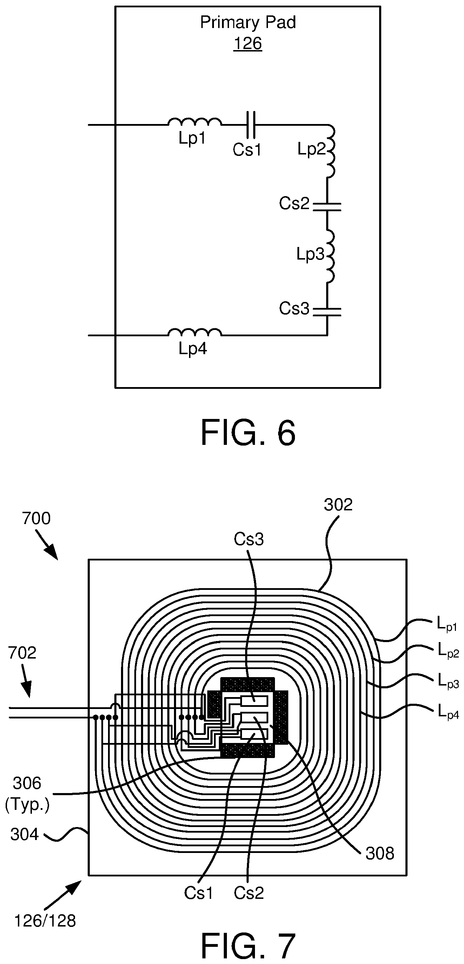

Figure 6 is a schematic block diagram illustrating one embodiment of a low voltage WPT pad. Capacitance that interacts with inductance of the winding 302 forms a resonant frequency. For example, Capacitors C2 and C3 may be combined into a capacitance Cs. In the embodiment, the capacitance Cs has been distributed in three capacitors, Cs1, Cs2 and Cs3. The winding 302 of the primary pad 126, which forms an inductance, is divided into four sections, Lp1, Lp2, Lp3, Lp4. The capacitors Cs1, Cs2 and Cs3 are distributed between winding sections as depicted. While three capacitors and four winding sections are depicted, one of skill in the art will recognize that other numbers of capacitors and winding sections may be used. The primary pad 126 depicted in Figure 6 may be used to lower voltage of the resonant converter 118 and primary pad 126, and is described further in U.S. Patent Application No. 16/103,512 filed August 14, 2018 for Patrice Lethellier.

The capacitors Cs1, Cs2 and Cs3, in one embodiment, are placed in the center section 308 as described above. In another embodiment, the capacitors Cs1, Cs2 and Cs3 are placed in a junction box or other container outside the primary pad 126.

Figure 7 is a schematic block diagram illustrating a plan view of the embodiment of a low voltage WPT pad 126/127 of Figure 6, illustrating an embodiment of the present invention.

The low voltage WPT pad 126/127 includes a winding 302 divided into four sections with inductances Lp1, Lp2, Lp3 and Lp4 with capacitors Cs1, Cs2 and Cs3 connected between the sections. In the embodiment, capacitors Cs1, Cs2 and Cs3 are located in the center section 308 and the chimney section 306 is modified to allow wiring to pass through to the capacitors Cs1, Cs2 and Cs3. Placing the capacitors Cs1, Cs2 and Cs3 in the center section 308 is advantageous to provide a more compact WPT pad 126, 128. In other embodiments, the chimney section 306 are modified to accommodate the conductors connecting the sections of the winding 302 to the capacitors Cs1, Cs2 and Cs3 by making holes, notches, etc. rather than removing a section of the ferrite material of the chimney section 306.

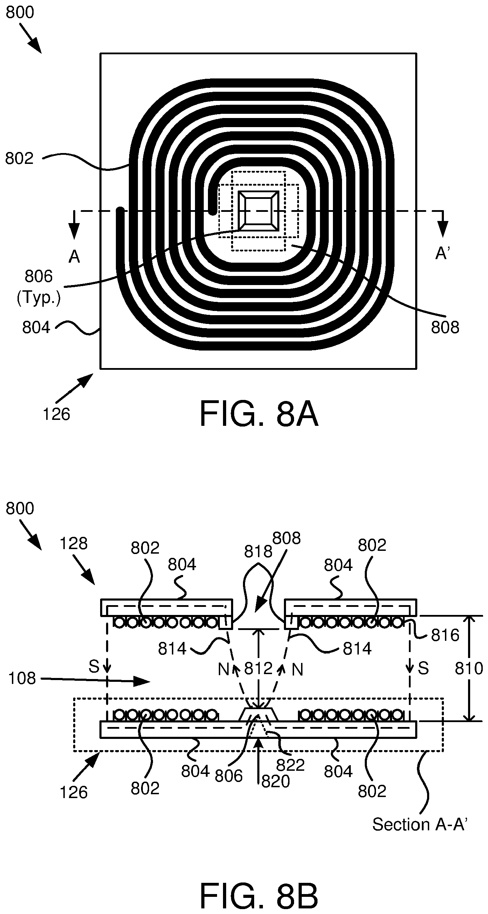

Figure 8A is a schematic block diagram plan view of one embodiment 800 of a WPT pad 126, not forming part of the present invention, with a pyramid-shaped ferrite chimney section 806 in a center of the WPT pad 126. Figure 8B is a schematic block diagram section view of a WPT pad 126 represented in Figure 8A along with an opposing WPT pad 128 with a chimney section 818. While the primary pad 126 is depicted with the pyramid-shaped chimney section 806 in the embodiment depicted in Figure 8B, the WPT pad 126 can be a primary pad 126 or a secondary pad 128.

The WPT pads 126 each include a winding 802 parallel to a parallel section 804 of a ferrite structure. The ferrite structure also includes a chimney section 806 located at a center point 820 about which the winding 802 is wound. The winding 802 includes a conductor wound in a planar configuration about the center point 820. An opposing winding, in this instance the secondary pad 128, includes a ferrite structure with a parallel section 804 and an open center section 808. The ferrite structure of the opposing WPT pad 128 includes a chimney section 818 on either side of the center section 808 adjacent to the winding 802.

Typically, the winding 802 is not wound with an empty space in the center for a variety of reasons. For example, bending radius of the conductor may prevent a tight winding 802 without an open center section. In another example, including the conductor in the center section 808 may be less efficient than leaving an open center section because conductors in the center section 808 may not contribute significantly to the magnetic field directed toward an opposing pad. One of skill in the art will recognize other reasons for an open center section 808.

Figure 8B is a cross section of both a primary pad 126, see Section A-A', and an opposing WPT pad, which is a secondary pad 128. The primary pad 126 and the secondary pad 128 may have similar layout for most features except for the chimney sections 806, 818. The WPT pad 126 may include separators 816 or some other structure to keep the winding 802 in place. The conductors of the winding 802 are depicted in Figure 8B as round for convenience, but may be oblong, square, rectangular or another shape and may be litz wire or some other multi-strand conductor. Typically, the winding 802 of the primary pad 126 and the secondary pad 128 are facing each other, which helps to direct the magnetic field between the WPT pads 126. A simplified magnetic pathway 814 is depicted where the center section forms a north pole and the exterior edges of the WPT pads 126 form a south pole. Note that the ferrite structure does not extend into the center section 808 for the secondary pad 128 but extends through the center part of the primary pad 126, which is discussed below. In another embodiment, the ferrite structure of the secondary pad 128 includes a center section 808 with ferrite material.

While the winding 802 in Figure 8A is depicted as a single conductor, other configurations may include two or more conductors wound in parallel, which may reduce voltage requirements of the WPT pads 126, 128. In one embodiment, the winding 802 is wound in a single layer in a planar configuration starting at a center point 820 and each wrap is laid external to a previous wrap. For example, the winding 802 may be in a Euclidean spiral or in a shape similar to a Euclidean spiral, such as depicted in Figure 8A where the spiral of the winding 802 is not circular but is more square or rectangular shaped. A winding 802 in this Euclidean spiral-like shape is beneficial for wireless power transfer in shaping an electromagnetic field from a primary pad 126 directed toward a secondary pad 128. In other embodiments, the winding 802 may include two or more layers of conductors.

The parallel section 804 is located on a side of the winding 802 with at least a portion in parallel with the winding 802. The depicted embodiment, as can be seen in Figure 8B, includes a parallel section 804 that is rectangular. Other shapes may be used where at least a portion in parallel with the winding 802. For example, the ferrite structure may have split shape as described in U.S. Patent Application No. 15/456,402 filed March 10, 2016 for Patrice Lethellier.

In some embodiments, the parallel section 804 of the ferrite structure includes ferrite bars in a radial pattern extending from the center section 808. In other embodiments, the parallel section 804 is made up of two or more ferrite elements that are in contact with each other or are close enough to form a magnetic pathway through the parallel section 804. One of skill in the art will recognize other designs of a parallel section 804 that include at least a portion in parallel with the winding 802.

The chimney sections 806, 818 are in in magnetic contact with the parallel section 804 and are located in the center section 808 or center point 820 of the winding 802. The chimney sections 806, 818 extend in a direction perpendicular to the parallel section 804. Typically, the primary pad 126 and the secondary pad are separated by a gap 108 where the parallel sections 804 are a distance 810 from each other. At the chimney section 806, 818, the distance 812 is reduced within the gap 108. Typically, the electromagnetic field strength in the center section 808 is stronger than in other locations. The ferrite structure provides a magnetic pathway 814 that directs a majority of the electromagnetic field, although some flux lines exist outside the ferrite structure. At the gap 108, the magnetic pathway 814 jumps across the gap 108. The chimney sections 806, 818 provide a shortened distance 812 across the gap 108 where the electromagnetic field strength is typically strong, which may increase magnetic coupling and an associated coefficient of coupling between the WPT pads 126, 128.

Typically, the winding 802 is embedded in a material, such as a resin, a plastic, asphalt, etc., which may hold the winding 802 in place and the material typically has a thickness. The thickness of the chimney sections 806, 818, in one embodiment, is a distance at least a thickness of the winding 802, where the thickness is measured in a direction perpendicular to the parallel section 804 of the ferrite structure. Due to the thickness of the winding 802, having chimney sections 806, 818 that are the thickness of the winding 802 or at least to a distance of the winding 802 beyond the parallel section 804 do not increase a total thickness of the WPT pads 126, 128. Where the chimney sections 806, 818 extends away from the parallel section 804 a distance of the thickness of the winding 802 and/or a distance of the winding 802 beyond the parallel section 804, a covering of the winding 802 may also extend across the chimney section 806 a same thickness as the covering over the winding 802.

In another embodiment, the chimney sections 806, 818 extend a distance beyond a thickness of the winding 802 and/or a distance of the winding 802 beyond the parallel section 804, which further reduces the distance 812 of the magnetic pathway 814 through the gap 108. However, in the embodiment the chimney sections 806, 818 may be exposed or may have a covering less thick than the covering over the winding 802.

The chimney sections 806, 818 may be designed based on a strength of the magnetic field at the location of the chimney section 806, 818. For example, a width of the chimney sections 806, 818 may be sufficient to prevent saturation of the ferrite material used for the chimney sections 806, 818. In the embodiment depicted in Figure 8A, the chimney section 806 of the primary pad 126 includes pyramid-shaped elements where the chimney section 818 of the secondary pad 128 includes rectangular elements. The rectangular elements may be sized to accommodate the winding 802. Rectangular elements may be more readily available other shapes and may be used for convenience. In other embodiments, the rectangular elements may be sized to overlap to form a continuous chimney section 818. In other embodiments, the chimney section 818 includes a custom ferrite material shaped in a circle or other convenient shape. One of skill in the art will recognize other shapes of a chimney section 806.

For the pyramid-shaped chimney section 806 of the primary pad 126, the shape may be designed to be at the center point 820 of the winding 802 and may be sized and shaped for an anticipated strength of the magnetic field through the chimney section 806 and may be sized and shaped to prevent saturation of the ferrite material of the chimney section 806. Note that, in some embodiments, the pyramid-shaped chimney section 806 may have extra material in a center near the parallel section 804 that is not necessary and may be removed. A dashed line 822 is depicted in Figure 8B indicating an approximate area of ferrite material that may be removed because the surrounding ferrite material is adequate to avoid saturation.

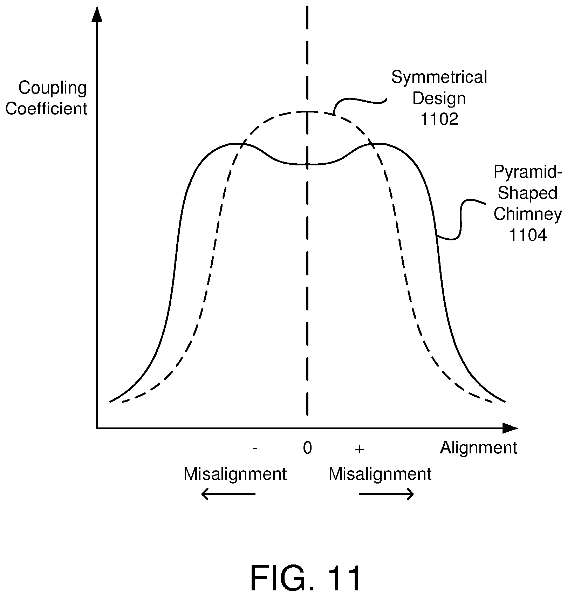

Having a WPT pad (e.g. 126) with a chimney section 806 with a pyramid-shape and an opposing pad (e.g. 128) with a chimney section 818 surrounding a center section 808 allows for more misalignment between the WPT pad 126 and the opposing WPT pad 128 than symmetrical WPT pads. Figure 11 is a representative graph of coupling coefficient vs alignment for a typical WPT pad and for a WPT pad 126 with a pyramid-shaped ferrite chimney section 806. For a typical WPT pad with a symmetrical design of the pads, the coupling coefficient 1102 typically has a peak coupling coefficient when the pads are aligned. For a WPT system 100 with a pyramid-shaped chimney section 806, the coupling coefficient 1104 has a lower peak, but maintains a higher coupling coefficient over a wider range of misalignment than the coupling coefficient 1102 of a symmetrical design. Thus, having a single chimney on the WPT pad 126 and two chimneys or no chimneys on an opposing WPT pad 128 provides a wider range of misalignment. Having the pyramid-shaped WPT pad 126 may sacrifice a higher coupling coefficient when highly aligned.

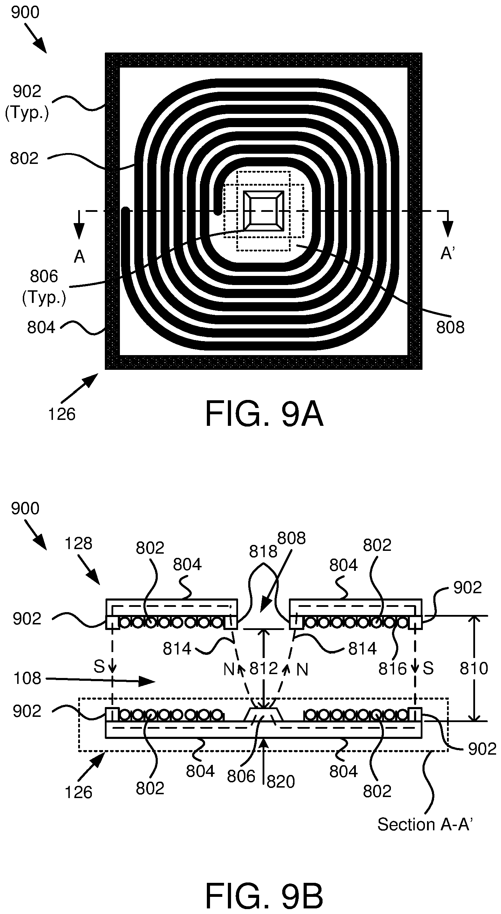

Figure 9A is a schematic block diagram plan view of one embodiment 400 of a WPT pad 126, not forming part of the present invention, with a pyramid-shaped ferrite chimney in a center and a ferrite chimney on an exterior edge of the WPT pad 126. Figure 9B is a schematic block diagram section view of a WPT pad 126 represented in Figure 9A along with an opposing WPT pad 128 with a chimney section 818 and an exterior section 902. In the embodiment 900, the WPT pads 126, 128 are the same as the embodiment 800 of Figures 8A and 8B but the ferrite structure includes an exterior section 902 around the perimeter of the parallel section 804. Discussion of the embodiment 800 of Figures 8A and 8B are substantially applicable to the embodiment 900 of Figures 9A and 9B.

The exterior section 902, in one embodiment, is located exterior to an outside edge of the winding 802, and the outside edge is distal to an inside edge adjacent to the center section 808 of the winding 802. The exterior section 902 is in magnetic contact with the parallel section 804 and extends perpendicular to the parallel section 804. By including an exterior section 902, the magnetic pathway 814 is further reduced and may further increase magnetic coupling and a coupling coefficient between the primary pad 126 and the secondary pad 128. In addition, the exterior section 902 may reduce stray electromagnetic radiation in a direction away from the WPT pads 126, 128, which may increase safety, may reduce a need for other shielding, may make passing of governmental emission standards easier, etc.

Note that the exterior section 902 of Figure 9A aligns with an exterior shape of the parallel section 804, which is square. In other embodiments, the parallel section 804 is shaped as a rectangle, a circle, an oval or other shape and the exterior section 902 may follow the exterior edge of the parallel section 804 or may be shaped differently.

As with the chimney sections 806, 818, the exterior section 902 may extend in a direction from the parallel section 804 toward the winding 802 and a distance at least a thickness of the winding 802 and/or a distance of the winding 802 beyond the parallel section 804, where the thickness is measured in a direction perpendicular to the ferrite structure. In another embodiment, the exterior section 902 extends a distance beyond a thickness of the winding 802 and/or a distance of the winding 802 beyond the parallel section 804.

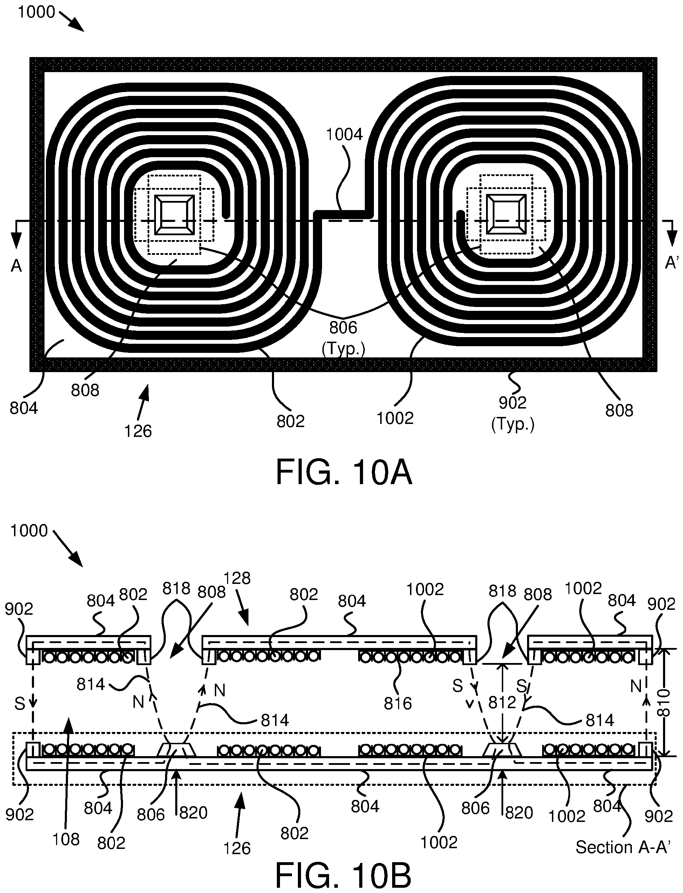

Figure 10A is a schematic block diagram plan view of one embodiment 1000 of a two winding WPT pads 126, 128, not forming part of the present invention, with a ferrite chimney in a center and a chimney section along an exterior edge of the WPT pad (e.g. 126 or 128). Figure 10B is a schematic block diagram section view of a WPT pad 126 represented in Figure 10A as well as an opposing WPT pad 128 with a chimney section 818. In the embodiment, the ferrite structure is adjacent to a first winding 802 and a second winding 1002. The windings 802, 1002 are connected and are wound to produce a north pole at a center section 808 of a first winding 802 and a south pole at the center section 808 of the second winding 1002, or vice versa. The windings 802, 1002 are adjacent to a parallel section 804 of the ferrite structure and include a chimney section 806 for each winding 802, 1002. As described for the embodiments 800, 900 of Figures 8A, 8B, 9A and 9B, the distance 812 between chimney sections 806 is less than the distance 810 between the parallel sections 804. The magnetic pathways 814 are different than the embodiments 800, 900 of Figures 8A, 8B, 9A and 9B.

Figure 10B depicts section views of a primary pad 126 and a secondary pad 128 and the windings 802, 1002 may include separators 816. The magnetic pathways 814 include a north pole at the chimney sections 806, 818 of the first winding 802 and a south pole at the chimney sections 806, 818 of the second winding 1002 with opposing poles at the edges of the WPT pads 126, 128. Dual windings 802, 1002 provide advantages in some instances, such as a stronger electromagnetic field between the windings 802, 1002.

One embodiment of WPT pads 126, 128 with two windings 802, 1002 (not shown) includes chimney sections 806, 818 for both windings 802, 1002 without exterior sections 902. In the embodiment 1000 depicted in Figures 10A and 10B, the WPT pads 126, 128 include exterior sections 902 on the exterior edges of the parallel section 804 of the ferrite structure. Note that one WPT pad (e.g. primary pad 126) may include an exterior section 902 while the opposite WPT pad (e.g. secondary pad 128) may exclude exterior sections 902, or vice versa. As with the other described embodiments 800, 900, one WPT pad (e.g. 126) includes a pyramid-shaped chimney section located at the center point of the center point 820 of each winding 802, 1002 and the center section 808 of the opposing WPT pad (e.g. 128) may be void of ferrite material in some embodiments, or may include ferrite material in the center section 808. In addition, the parallel section 804 and/or exterior section 902 may be shaped differently than shown, as described with regard to the embodiments 800, 900 of Figures 8A, 8B, 9A and 9B.

The present invention may be embodied in other specific forms within the scope of the present invention.

The described embodiments are to be considered in all respects only as illustrative and not restrictive. The scope of the invention is, therefore, indicated by the appended claims rather than by the foregoing description.

## Claims

1. A wireless power transfer, WPT, pad (126; 128; 700) comprising:
a winding (302) comprising a conductor, wherein the conductor is wound in a planar configuration, the winding (302) comprising a center section (308) about which the winding (302) is wound; and
a ferrite structure comprising:
a parallel section (304) located on a side of the winding (302) with at least a portion in parallel with the winding (302); and
a chimney section (306) in magnetic contact with the parallel section (304) and located in the center section (308) of the winding (302), the chimney section (306) extending perpendicular to the parallel section (304);
wherein the chimney section comprises a gap,
**characterised in that** one or more capacitors (Cs1, Cs2, Cs3) of the WPT pad are located in the center section (308) of the winding (302) and one or more conductors from the winding to the one or more capacitors extend through the gap.

2. The WPT pad of claim 1, wherein the chimney section (306) extends in a direction from the parallel section (304) toward the winding (302) and extends a distance of at least a thickness of the winding (302), the thickness being measured in a direction perpendicular to the parallel section (304) of the ferrite structure.

3. The WPT pad of claim 2, wherein the chimney section (306) extends a distance beyond the thickness of the winding.

4. The WPT pad of claim 1, wherein the chimney section (306) is positioned adjacent to the winding in the center section (308) of the winding (302).

5. The WPT pad of claim 1, wherein the ferrite structure further comprises an exterior section (402) located exterior to an outside edge of the winding (302), the outside edge being distal to an inside edge adjacent to the center section of the winding (302), wherein the exterior section (402) is in magnetic contact with the parallel section (304) and extends perpendicular to the parallel section, wherein the exterior section (402) extends in a direction from the parallel section toward the winding and extends a distance of at least a thickness of the winding, the thickness being measured in a direction perpendicular to the ferrite structure.

6. The WPT pad of claim 1, wherein the WPT pad (126; 128) is configured to couple with an opposing WPT pad (128; 126), wherein the WPT pad is one of a transmitter pad (126) that transmits power wirelessly to the opposing WPT pad (128) that is a secondary pad and a secondary pad (128) that receives power wirelessly from the opposing WPT pad (126) that is a transmitter pad.

7. A wireless power transfer, WPT, system comprising:
a resonant converter (118) that is adapted to receive power from a power source (112); and
a WPT pad (126) as recited in claim 1, the WPT pad (126) being connected to the resonant converter (118) and receiving power from the resonant converter (118).

## Patentansprüche

1. WPT-Pad (126; 128; 700) zur drahtlosen Energieübertragung, umfassend:
eine Wicklung (302), umfassend einen Leiter, wobei der Leiter in einer planaren Konfiguration gewickelt ist, wobei die Wicklung (302) einen mittleren Abschnitt (308) umfasst, um den die Wicklung (302) gewickelt ist; und
eine Ferritstruktur, umfassend:
einen parallelen Abschnitt (304), der auf einer Seite der Wicklung (302) angeordnet ist, wobei zumindest ein Abschnitt parallel zu der Wicklung (302) verläuft; und
einen Kaminabschnitt (306) in magnetischem Kontakt mit dem parallelen Abschnitt (304), der in dem mittleren Abschnitt (308) der Wicklung (302) angeordnet ist, wobei sich der Kaminabschnitt (306) senkrecht zu dem parallelen Abschnitt (304) erstreckt;
wobei der Kaminabschnitt einen Spalt umfasst,
**dadurch gekennzeichnet, dass**
ein oder mehrere (Csl, Cs2, Cs3) Kondensatoren des WPT-Pads im mittleren Abschnitt (308) der Wicklung (302) angeordnet sind und ein oder mehrere Leiter von der Wicklung zu dem einen oder den mehreren Kondensatoren durch den Spalt verlaufen.

2. WPT-Pad nach Anspruch 1, wobei sich der Kaminabschnitt (306) in einer Richtung von dem parallelen Abschnitt (304) in Richtung der Wicklung (302) erstreckt und in einem Abstand von zumindest einer Dicke der Wicklung (302) erstreckt, wobei die Dicke in einer Richtung senkrecht zu dem parallelen Abschnitt (304) der Ferritstruktur gemessen wird.

3. WPT-Pad nach Anspruch 2, wobei sich der Kaminabschnitt (306) über einen Abstand über die Dicke der Wicklung hinaus erstreckt.

4. WPT-Pad nach Anspruch 1, wobei der Kaminabschnitt (306) angrenzend an die Wicklung in dem mittleren Abschnitt (308) der Wicklung (302) positioniert ist.

5. WPT-Pad nach Anspruch 1, wobei die Ferritstruktur ferner einen äußeren Abschnitt (402) umfasst, der außerhalb einer Außenkante der Wicklung (302) angeordnet ist, wobei die Außenkante distal zu einer Innenkante an den mittleren Abschnitt der Wicklung (302) angrenzt, wobei der äußere Abschnitt (402) in magnetischem Kontakt mit dem parallelen Abschnitt (304) steht und sich senkrecht zu dem parallelen Abschnitt erstreckt, wobei sich der äußere Abschnitt (402) in einer Richtung von dem parallelen Abschnitt zu der Wicklung und in einem Abstand von zumindest einer Dicke der Wicklung erstreckt, wobei die Dicke in einer Richtung senkrecht zu der Ferritstruktur gemessen wird.

6. WPT-Pad nach Anspruch 1, wobei das WPT-Pad (126; 128) zum Koppeln mit einem gegenüberliegenden WPT-Pad (128, 126) konfiguriert ist, wobei das WPT-Pad eines von einem Sender-Pad ist, das Leistung drahtlos an DAS gegenüberliegende WPT-Pad (128) überträgt, das ein sekundäres Pad ist, und einem sekundären Pad (128), das Leistung drahtlos von dem gegenüberliegenden WPT-Pad (126) empfängt, das ein Sender-Pad ist.

7. WPT-System zur drahtlosen Energieübertragung, umfassend:
einen Resonanzwandler (118), der angepasst ist, um Leistung von einer Energiequelle (112) zu empfangen und;
ein WPT-Pad (126) nach Anspruch 1, wobei das WPT-Pad (126) mit dem Resonanzwandler (118) verbunden ist und Leistung von dem Resonanzwandler (118) empfängt.

## Revendications

1. Plot de transfert de puissance sans fil WPT, (126 ; 128 ;700) comprenant :
un enroulement (302) comprenant un conducteur, dans lequel le conducteur est enroulé dans une configuration plane, l'enroulement (302) comprenant une section centrale (308) autour de laquelle l'enroulement (302) est enroulé ; et
une structure de ferrite comprenant :
une section parallèle (304) située sur un côté de l'enroulement (302) avec au moins une partie parallèle à l'enroulement (302) ; et
une section de cheminée (306) en contact magnétique avec la section parallèle (304) et située dans la section centrale (308) de l'enroulement (302), la section de cheminée (306) s'étendant perpendiculairement à la section parallèle (304) ;
dans lequel la section de cheminée comprend un espace,
**caractérisé en ce que**
un ou plusieurs condensateurs (Cs1, Cs2, Cs3) du plot WPT sont situés dans la section centrale (308) de l'enroulement (302) et un ou plusieurs conducteurs de l'enroulement aux un ou plusieurs condensateurs s'étendent à travers l'espace.

2. Plot WPT selon la revendication 1, dans lequel la section de cheminée (306) s'étend dans une direction à partir de la section parallèle (304) vers l'enroulement (302) et s'étend à une distance au moins égale à une épaisseur de l'enroulement (302), l'épaisseur étant mesurée dans une direction perpendiculaire à la section parallèle (304) de la structure de ferrite.

3. Plot WPT selon la revendication 2, dans lequel la section de cheminée (306) s'étend à une distance au-delà de l'épaisseur de l'enroulement.

4. Bloc WPT selon la revendication 1, dans lequel la section de cheminée (306) est positionnée de manière adjacente à l'enroulement dans la section centrale (308) de l'enroulement (302).

5. Bloc WPT selon la revendication 1, dans lequel la structure de ferrite comprend en outre une section extérieure (402) située à l'extérieur d'un bord extérieur de l'enroulement (302), le bord extérieur étant distal à un bord intérieur adjacent à la section centrale de l'enroulement (302), dans lequel la section extérieure (402) est en contact magnétique avec la section parallèle (304) et s'étend perpendiculairement à la section parallèle, dans lequel la section extérieure (402) s'étend dans une direction allant de la section parallèle vers l'enroulement et une distance d'au moins une épaisseur de l'enroulement, l'épaisseur étant mesurée dans une direction perpendiculaire à la structure de ferrite.

6. Plot WPT selon la revendication 1, dans lequel le plot WPT (126 ; 128) est configuré pour se coupler à un plot WPT opposé (128, 126), dans lequel le plot WPT est l'un parmi un plot émetteur qui émet sans fil de l'énergie au plot WPT opposé (128) qui est un plot secondaire et d'un plot secondaire (128) qui reçoit de l'énergie sans fil du plot WPT opposé (126) qui est un plot émetteur.

7. Système de transfert de puissance sans fil, WFT, comprenant :
un convertisseur résonnant (118) qui est adapté à la réception d'énergie à partir d'une source d'énergie (112) et ;
un plot WPT (126) selon la revendication 1, le plot WPT (126) étant connecté au convertisseur résonnant (118) et recevant de l'énergie depuis le convertisseur résonnant (118).
